(19) Europäisches Patentamt
European Patent Office
Office européen des brevets

(11) Veröffentlichungsnummer: **0 278 394**
**A2**

(12) # EUROPÄISCHE PATENTANMELDUNG

(21) Anmeldenummer: **88101600.0**

(22) Anmeldetag: **04.02.88**

(51) Int. Cl.4: **C08G 18/08** , C08G 18/42 , C08G 18/73 , C08G 18/75 , C08G 18/80 , C09D 3/72

(30) Priorität: **12.02.87 DE 3704350**

(43) Veröffentlichungstag der Anmeldung: **17.08.88 Patentblatt 88/33**

(84) Benannte Vertragsstaaten: **AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Höfer, Rainer, Dr.**
**Klever Strasse 31**
**D-4000 Düsseldorf 30(DE)**
Erfinder: **Grützmacher, Roland**
**Heinrich-Heine-Strasse 2**
**D-5603 Wülfrath(DE)**
Erfinder: **Gress, Wolfgang**
**Westfalenweg 247**
**D-5600 Wuppertal-Elberfeld(DE)**
Erfinder: **Nagorny, Ulrich**
**Heinrich-Lersch-Strasse 37**
**D-4010 Hilden(DE)**

(54) **Wasserverdünnbare Überzugsmittel.**

(57) Die Erfindung betrifft wasserverdünnbare Überzugsmittel zur Herstellung eines Füllers für die Automobilindustrie auf der Basis einer wäßrigen Polyurethandispersion sowie ein Verfahren zur Herstellung desselben, wobei die Polyurethandispersion besteht aus Polyetherpolyolen, gegebenenfalls alkoxylierten oleochemischen Polyolen, anionische Gruppen tragenden Dihydroxy-und/oder Diaminoverbindungen und organischen Diisocyanaten.

EP 0 278 394 A2

## Wasserverdünnbare Überzugsmittel

Die Erfindung betrifft wasserverdünnbare Überzugsmittel zur Herstellung eines Füllers für die Automobilindustrie auf der Basis wäßriger Polyurethandispersionen sowie ein Verfahren zur Herstellung eines Füllers und die Verwendung des genannten wasserverdünnbaren Überzugsmittels in der Automobilindustrie.

Zu Beginn des Autozeitalters war die Automobillackierung ein zeitaufwendiger, komplexer Prozeß, in dem eine Vielzahl verschiedener Lackschichten nacheinander aufgetragen wurden, immer wieder unterbrochen von langen Trocknungszeiten und Schleifprozessen (s.a. das Kapitel "Automobil Finishing" in P. Nylen, E. Sunderland, Modern Surface Coatings, London, New York, Sidney 1965).

In den 20er Jahren wurde diese Prozedur durch schnelltrocknende Nitrocelluloselacke abhelöst. NC-Lacke wurden in der Automobilindustrie nach dem zweiten Weltkrieg durch aminneutralisierte Alkydharze, diese ihrerseits wiederum teilweise durch Acrylatharze ersetzt bzw. ergänzt.

Eine moderne Lackierstraße für die Automobil-Karosserie-Lackierung umfaßt die Stationen Entfettung, Phos phatierung, kathodische Elektro-Tauchlackierung (KTL), Unterbodenschutz, Füllerauftrag, Decklackierung, wobei der Decklack bei Metallic-Lackierungen seinerseits wieder aus einer Basisschicht und einem abschließenden Klarlack besteht (s.a. A. Goldschmidt, E. Knappe "Lackieren von Metall und organischen Materialien" in Glasurit-Handbuch, 11. Auflage, Hannover 1984).

Eine besondere Aufgabe kommt bei der Automobil-Lackierung dem Füller zu. Er soll einerseits zum metallischen Untergrund hin Unebenheiten und Rauhigkeiten der KTL ausgleichen, um den Untergrund für den nachfolgenden Decklack zu egalisieren. Da andererseits arbeitskräfteintensive Schleifarbeiten möglichst weitgehend reduziert werden sollen, ist vom Füller ein besonders guter Verlauf zu fordern.

Weiterhin soll der Füller als zweite Deckschicht der Lackierung die korrosionsschützenden Eigenschaften der KTL ergänzen und verstärken. Zur Erfüllung dieser Aufgabe werden besonders hohe Anforderungen an die Steinschlagfestigkeit, die Resistenz gegen andere mechanische Angriffe und die Haftfestigkeit zum Untergrund gestellt.

Neben der Haftfestigkeit zum Untergrund soll der Füller jedoch auch eine gute Haftung zum Decklack bzw. zur Basisschicht einer Metallic-Lackierung vermitteln. Moderne, schnellaufende Lackierstraßen stellen darüber hinaus an den Füller die Forderung nach einem schnellen, guten Durchtrocknen, auch in dicken Schichten, bei den üblichen Einbrenntemperaturen von 120 bis 170 °C.

In der überwiegenden Anzahl der Automobil-Werke werden Füllermaterialien verarbeitet, die in den Bereich der lösemittelhaltigen Einbrennlacke gehören. Aus wirtschaftlichen Gründen und zur Verringerung der Umweltbelastung ist man bemüht, organische Lösemittel in Überzugsmassen so weit wie möglich zu vermeiden.

In der EP-PS 89497 wird ein Überzugsmittel zur Herstellung der Basisschicht einer Metallic-Lackierung beschrieben, das eine Polyurethan-Dispersion enthält. Zwischen der Basisschicht einer Metallic-Lackierung und einem Füller besteht ein erheblicher technischer Unterschied, was Anwendung und Anforderungsprofil anbetrifft.

Die EP-PS 89 497 beschreibt Polyurethandispersionen, die dadurch gekennzeichnet sind, daß sie ein lineares Polyether-und/ oder Polyesterdiol mit einem Molgewicht von 400 bis 3000 enthalten.

Das Grundprinzip der Herstellung wasserverdünnbarer Polyurethandispersionen durch Einbau einer 2,2-Di-(hydroxymethyl)carbonsäure in eine mindestens ein weiteres Polyol enthaltende Polyurethan-Kette ist in der US-PS 3 412 054 beschrieben. In D. Dietrich et al., Angew. Chemie 82, 53 (1970) werden zusammenfassend die Herstellmöglichkeiten für Polyurethan-lonomere dargestellt. Jedoch reicht dieser Stand der Technik nicht aus, um allgemein mit wasserverdünnbaren Polyestern verträgliche Polyurethandispersionen zu formulieren, die auch für die spezifische Anwendung als Automobilfüller-Polyurethandispersionen geeignet sind.

Die in EP-PS 17 199 beschriebenen sogenannten "ölmodifizierten" Polyurethandispersionen führen von der vorliegenden Erfindung weg, da unter dem Terminus "ölmodi fizierte Polyurethandispersionen" Produkte verstanden werden, die als PUR-Bausteine neben Diisocyanat lediglich Dimethylolpropionsäure oder andere Polyolkomponenten und ungesättigte "Fettsäureesterpolyole" (definiert als Polyester aus ungesättigten Triglyceriden oder ungesättigten Fettsäuren und niedermolekularen polyfunktionellen Alkoholen) enthalten.

Die vorliegende Erfindung hat sich zur Aufgabe gemacht, eine neues Überzugsmittel zur Herstellung eines Füllers für die Automobilindustrie auf der Basis einer wäßrigen Polyurethandispersion zur Verfügung zu stellen, das als Lösemittel oder als kontinuierliche Phase einer Dispersion überwiegen Wasser enthält und in dem organische Lösungsmittel nicht mehr oder nur noch in geringen Mengen enthalten sind. Die weitere Aufgabe der vorliegenden Erfindung bestand darin, wasserverdünnbar Überzugsmittel zur Herstellung eines Füllers für die Automobilindustrie auf der Basis einer wäßrigen Polyurethandispersion mit einem Feststoffgehalt von 10 bis 50 % und einer Viskosität im Bereich von 10 bis 50 000 mPa.s zur Verfügung zu stellen. Weiterhin bestand die Aufgabe der vorliegenden Erfindung darin, ein Verfahren zur Herstellung des oben genannten Füllers zur Verfügung zu stellen. Ein entsprechender Füller sollte insbesondere für die Verwendung für die Herstellung eines Füllers in der Automobilindustrie geeignet sein.

Gegenstand der vorliegenden Erfindung sind somit wasserverdünnbare Überzugsmittels zur Herstellung eines Füllers für die Automobilindustrie auf der Basis einer wäßrigen Polyurethandispersion mit einem Feststoffge halt von 10 bis 50 % und einer Viskosität im Bereich von 10 bis 50 000 mPa.s. Erfindungsgemäße wasserverdünnbare Überzugsmittel zeichnen sich dadurch aus, daß die Polyurethandispersion besteht aus

(a) Polyetherpolyolen mit endständigen Hydroxylgruppen, einer Funtkionalität größer oder gleich 3 und einem Molekulargewicht im Bereich von 1 000 bis 20 000,

(b) gegebenenfalls alkoxylierten oleochemischen Polyolen,

(c) anionische Gruppen tragenden Dihydroxy-und/oder Diaminoverbindungen und (d) organischen Diisocyanaten.

Aufgrund der großen Funtkionalität der Polyetherpolyole sowie deren hohem Molekulargewicht ist es möglich, wasserverdünnbare Überzugsmittel zur Verfügung zu stellen, die zur Herstellung eines Füllers für die Automobilindustrie geeignet sind, da aufgrund der erhöhten Funtkionalität eine verbesserte Vernetzung und somit eine größere Härte der Überzugsmittel resultiert.

Im allgemeinen können wasserverdünnbare Überzugsmittel zur Herstellung eines Füllers für die Automobilindustrie auf der Basis einer wäßrigen Polyurethandispersion eine Viskosität im Bereich von 10 bis 50 000 mPa.s aufweisen. Im Rahmen der vorliegenden Erfindung sind jedoch wasserverdünnbare Überzugsmittel bevorzugt, wobei die Viskosität der Dispersion im Bereich von 10 bis 5 000 mPa.s liegt.

Polyetherpolyole mit endständigen Hydroxylgruppen und einer Funktionalität größer oder gleich 3 weisen im Rahmen der vorliegenden Erfindung ein Molekulargewicht im Bereich von 1 000 bis 20 000 auf. Vorzugsweise werden jedoch wasserverdünnbare Überzugsmittel verwendet, wobei das Polyetherpolyol mit endständigen Hydroxylgruppen und einer Funktionalität größer oder gleich 3 ein Molekulargewicht im Bereich von 3 000 bis 12 000 aufweist.

Polyetherpolyole im Simme der vorliegenden Erfindung entsprechen der Formel (I)

$$[R]_x \left\{ \begin{array}{l} \left[(CH_2-CH_2-O)_a - (CH_2-\underset{CH_3}{CH}-O)_b - (CH_2-CH_2O)_c\right]_y - H \\ \left[(CH_2-\underset{CH_3}{CH}-O)_d - (CH_2-CH_2-O)_e\right]_z - H \end{array} \right. \qquad (I)$$

in der

R für einen Glycerin-, Trimethylolpropan-, Trimethylolethan-oder Polyglycerinrest mit dem Polymerisationsgrad x = 1 bis 6 steht und die Indices y = (x - z ÷ 2), z = 0 bis 4, a = 1 bis 15, b = 20 bis 100, c = 1 bis 15, d = 20 bis 150 und e = 1 bis 15 bedeuten mit der Maßgabe, daß die Summen (a + c ÷ e) = 3 bis 40, (b + d) = 40 bis 300 und (c + e) = 1 bis 15 bedeuten und y mindestens den Wert 1 besitzt.

Bevorzugt sind solche Blockpolymeren, in denen die Indices y mindestens = 2, a = 1 bis 5, b bzw. d = 30 bis 100 und c bzw. e = 1 bis 5 bedeuten und die Summe (a ÷ c ÷ e) = 3 bis 20 beträgt. Weiterhin sind solche Blockpolymeren besonders bevorzugt, in denen R für einen Glycerinrest oder Trimethylolpropanrest steht, d.h. in denen x = 1 bedeutet. Ist R ein Glycerinrest, so sind Blockpolymere auf Basis eines natürlichen Glycerins im Simme der Erfindung besonders bevorzugt. In diesen, vom Glycerin oder Trimethylolpropan abgeleiteten Blockpolymeren sind im allgemeinen 2 bis 3 Hydroxylgruppen mit Ethylenglykolethergruppen substituiert, d.h. y steht für 2 oder 3 und z für 0 oder 1.

Wasserverdünnbare Überzugsmittel entsprechend der vorliegenden Erfindung enthalten oleochemische Polyole. Unter oleochemischen Polyolen werden erfindungsgemäß solche Polyole verstanden, die sich aus natürlich nachwachsenden Fett-und Ölrohstoffen ableiten und aus diesen über chemisch Verfahren herstellbar sind. Entsprechende oleochemische Polyole bestehen aus Triolen und Polyolen mit wenigstens 10 C-Atomen, die durch Addition einwertiger Alkohole mit 1 bis 8 C-Atomen an epoxidierte Triglyceridöle hergestellt werden, wobei die gegebenenfalls gereinigten Additionsprodukte mit alkylenoxiden mit 2 bis 4 C-Atomen zur Reaktion gebracht werden. Als Alkohole kommen dabi die geradkettigen Alkohole Methanol, Ethanol, n-Propanol, n-Butanol, n-Pentanol, n-Hexanol, n-Heptanol, n-Octanol oder deren in der Alkylkette verzweigte bzw. die Hydroxylgruppe an einem sekundären oder tertiären C-Atom tragenden Isomeren in Frage. Epoxidierte Triglyceridöle, wie sie in dem erfindungsgemäßen Verfahren Verwendung finden, sind als solche aus dem Stand der Technik bekannt. Sie finden in anderen technichen Bereichen als sogenannte "Epoxidweichmacher" Verwendung und sind für diese Zwecke auch im Handel erhältlich. Sie werden durch Epoxidierung ungesättigter Öle, beispielsweise Sojaöl, Leinöl, Tallöl, Baumwollsaatöl,Erdnußöl, Palmöl, Sonnenblumenöl, Rüböl oder Klauenöl, beispielsweise nach dem in Journal American Chemical Society 67, 412 (1945) beschriebenen Verfahren mit Peressigsäure erhalten. Durch die Epoxidierung werden, je nach eingesetzter Menge Peressigsäure, die olefinischen Doppelbindungen der glyceridisch gebundenen Fettsäuren ganz oder teilweise in Oxiranringe überführt. Gemäß einer Ausführungsform der vorliegenden Erfindung können wasserverdünnbare Überzugsmittel als oleochemische Polyole Rizinusölalkoxylate mit 0 bis 50 Ethylenoxid-und/oder 0 bis 100 Propylenoxidgruppen enthalten. Ebenso sind Ringöffnungsprodukte epoxidierter Triglyceride, beispielsweise von Soja-und/oder Leinölepoxiden mit Methanol sowie Rizinusöl mit 0 bis 10 Ethylenoxid-und/oder 0 bis 40 Propylenoxidgruppen verwendbar als oleochemische Polyole in wasserverdünnbaren Überzugsmitteln.

Um die Dispergierbarkeit bzw. Löslichkeit in Wasser zu gewährleisten, müssen erfindungsgemäße Polyurethane ionisierbare, ionische Gruppen tragende Verbindungen aufweisen. Bevorzugterweise werden Dihydroxy-und/oder Diaminoverbindungen, die eine Carboxylat-, Sulfonat-und/oder Ammoniumgruppe enthalten, eingesetzt. Insbesondere bevorzugt als anionische Gruppen tragende Dihydroxyverbindung wird Dimethylolpropionsäure.

Als Isocyanatkomponente kommen prinzipiell die zurHerstellung von Polyurethanen geeigneten, z.B. in der EP-PS 89 497 beschriebenen Diisocyanate in Frage. Bevorzugt sind aliphatische Diisocyanate, insbesondere Isophorondiisocyanat, 4.4-Methylen-bis(cyclohexylisocyanat) , Hexamethylen-1.6-diisocyanat und Dimerfettsäurediisocyanat. Auch sogenannte blockierte oder "verkappte" Polyisocyanate können verwendet oder mitverwendet werden. Diese blockierten Polyisocyanate sind bei Raumtemperatur gegenüber Hydroxylgruppen beständig und reagieren erst bei erhöhten Temeraturen, beispielsweise unter Einbrennbedingungen. Gemäß einer bevorzugten Ausführungsform enthalten wasserverdünnbare Überzugsmittel als zusätzliche Bindekomponente ein blockiertes Polyisocyanat in einem Anteil von 0 bis 60 Gew.-% und vorzugsweise von 1 bis 10 Gew.-%, bezogen auf den Festkörpergehalt der Polyurethandispersionen. Bei der Herstellung der blockierten Polyisocyanate können beliebige, für die Vernetzung geeignete organische Polyisocyanate verwendet werden. Isocyanate, die 3 bis 36 C-Atome enthalten, können vorteilhafterweise verwendet werden. Die in der vorliegenden Erfindung als Vernetzungsmittel in Betracht kommenden organischen Polyisocyanate können auch Prepolymere sein, die sich beispielsweise von einem Polyol einschließlich eines Polyetherpolyols oder eines Polyesterpolyols ableiten. Dazu werden bekanntlich Polyole mit einem Überschuß von Polyisocanaten umgesetzt, wodurch Prepolymere mit endständigen Isocyanatgruppen entstehen.

Die blockierten Polyisocyanate werden hergestellt, indem man eine ausreichende Menge eines Alkohols mit einem organischen Polyisocyanat umsetzt, so daß keine freien Isocyanatgruppen mehr vorhanden sind.

Wasserverdünnbare Überzugsmittel im Sinne der vorliegenden Erfindung können zusätzlich ein Diamin mit primären und/oder sekundären Aminogruppen enthalten.

Dieses wasserlösliche Diamin kann als zusätzlicher Kettenverlängerer zu dem Wasser zugegeben werden. Die Kettenverlängerung umfaßt die Umsetzung der verbleibenden Isocyanatgruppen mit Wasser unter Bildung von Harnstoffgruppen und weitere Polymerisation des polymeren Materials, wobei alle Isocyanatgruppen durch Zugabe eines großen stöchiometrischen Überschusses an Wasser umgesetzt werden. Nach diesem Verfahren hergestellte erfindungsgemäße Polyurethane sind thermoplastisch, d.h., daß sie nach ihrer Bildung, außer durch Zugabe zusätzlicher Härtungsmittel, nicht stark weiterhärten.

Die erfindungsgemäßen Überzugsmittel weisen gegenüber anderen wäßrigen Dispersionen eine verbesserte Pigmentierbarkeit auf. Diese Vorteile werden durch die oben beschriebene Polyurethandispersion bewirkt, die somit ein essentieller Bestandteil der Überzugsmittel ist. Wenn nun auch die vorteilhaften Eigenschaften bei Verwendung der Polyurethandispersionen als alleiniges Bindemittel erreicht werden, so ist es doch in vielen Fällen wünschenswert, die Überzugsmittel zur Herstellung eines Füllers für die Automobilindustrie durch Mitverwendung weiterer Bindemittel oder Härtungskomponenten zu modifizieren oder im Hinblich auf bestimmte Eigenschaften gezielt zu verbessern.

Vorteilhafterweise enthalten daher Überzugsmittel als zusätzliche Bindemittelkomponente ein wasserverdünnbares Melaminharz.

Wasserlösliche Melaminharze an sich sind bekannt und werden in größerem Umfang in Überzugsmitteln eingesetzt. Es handelt sich hierbei um veretherte Melamin-Formaldehyd-Kondensationsprodukte. Ihre Wasserlöslichkeit hängt, abgesehen vom Kondensationsgrad, der möglichst niedrig sein soll, von der Veretherungskomponente ab. Deie größte Bedeutung haben die Hexamethoxy methylmelaminharze. Bei Verwendung von Lösungsvermittlern können auch butanolveretherte Melaminharze in wäßriger Phase dispergiert werden.

Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppe durch Neutralisation wasserlöslich und können als Vernetzerkomponente in den erfindungsgemäßen Überzugsmitteln eingesetzt werden. Anstelle der beschriebenen Melaminharze können auch andere wasserlösliche oder wasserdispergierbare Aminoharze und/oder wasserverdünnbare Phenolharze eingesetzt werden.

Neben den genannten Melaminharzen oder Phenolharzen können auch weitere Bindemittelkomponenten, wie beispielsweise wasserverdünnbare Polyesterharze und/oder wasserverdünnbare Polyacrylatharze, den erfindungsgemäßen Überzugsmitteln zugesetzt werden. Vorzugsweise wird dabei das Gewichtsverhältnis von Melaminharz zu Polyesterharz und/oder Polyacrylatharz im Verhältnis von 1 : 1 bis 1 : 9 eingestellt.

In der Regel werden Automobilfüller im Rahmen der Erfingung so formuliert, daß der Gesamtanteil an Melamin-und/oder Phenolharz, Polyester - und Polyacrylatharz, bezogen auf den Festkörpergehalt der Polyurethan-Dispersion, im Verhältnis 1 : 0,1 bis 1 : 100, beispielsweise 1 : 0,25 bis 1 : 0,4, vorhanden sind. Bevorzugt sind aber Harzmischungen, in denen das Polyurethanharz im Unterschuß vorhanden ist. Die Polyurethanharze sind somit geeignet, auch in geringen Mengen zugesetzt, die Gebrauchseigenschaften wasserlöslicher Polyester/-Malaminharz-Mischungen für den Einsatz als Automobilfüller entscheidend zu verbessern.

Wasserverdünnbare Polyester im Simme der vorliegenden Erfindung sind solche mit freien Carboxylgruppen, d.h. Polyester mit hoher Säurezahl. Es sind grundsätzlich zwei Methoden bekannt, die benötigten Carboxylgruppen in das Harzsystem einzufügen. Der erste Weg besteht darin, die Veresterung bei der gewünschten Säurezahl abzubrechen. Nach Neutralisation mit Basen sind die so erhaltenen Polyester in Wasser löslich und verfilmen beim Einbrennen. Die zweite Möglichkeit besteht in der Bildung partieller Ester von Di-oder Polycarbonsäuren mit hydroxylreichen Polyestern niedriger Säurezahl. Für diese Reaktion werden üblicherweise Anhydride der Dicarbonsäuren herangezogen, welche unter milden Bedingungen unter Ausbildung einer freien Carboxylgruppe mit der Hydroxylkomponente umgesetzt werden. Die wasserverdünnbaren Polyester können ihrerseits wieder teilweise mit wasserverdünnbaren Polyacrylatharzen kombiniert werden. Auch die wasserverdünnbaren Polyacrylatharze enthalten freie Carboxylgruppen. Es handelt sich in der Regel um Acryl-bzw. Methacrylcopolymerisate, wobei die Carboxylgruppen aus den Anteilen an Acryl-oder Methacrylsäure stammen.

In einer weiteren Ausführungsform der Erfindung werden unter wasserverdünnbaren Polyestern im Sinne der vorliegenden Erfindung sogenannte Alkydharzwasserlacke verstanden, die Säurezahlen zwischen 10 und 40 aufweisen und nach Neutralisation mit Aminoalkoholen in Abwesenheit organischer Lösemittel gegebenenfalls unter Verwendung von Emulgatoren, welche die Wasser festigkeit des festen Lackfilms nicht herabsetzen, zu klaren wäßrigen Zubereitungen konfektionierbar sind. Solche Wasserlacke werden in der DE-OS 33 18 595 beschrieben und werden hergestellt, indem man ein Vorkondensat der Säurezahl 50 bis 130 durch Reaktion mit Alkoholen der Funktionalität > 2 zu einem hydrophilen Alkydharz mit Säurezahl < 40 kondensiert und dieses in Gegenwart von Aminoalkoholen und gewünschtenfalls OH-funktionellen Emulgatoren in Wasser dispergiert, dadurch gekennzeichnet, daß man zur Herstellung des Vorkondensates

(a) Fettsäuren und/oder mehrfunktionelle Carbonsäuren oder deren reaktive Derivate mit mehrfunktionellen Alkoholen zu einem Polyester mit Hydroxylendgruppen und Säurezahl < 2 umsetzt und

(b) den Polyester durch Reaktion mit mehrfunktionellen Carbonsäuren und/oder deren reaktiven Derivaten in das Vorkondensat mit Säurezahl zwischen 50 und 130 umwandelt.

Die erfindungsgemäßen Überzugsmittel können alle bekannten und in der Lackindustrie üblichen Pigmente oder Farbstoffe, die anorganischer oder organischer Natur sein können, enthalten.

Den erfindungsgemäßen Überzugsmitteln können auch weitere Zusätze wie Lösemittel, Füllstoffe, Weichmacher, Stabilisatoren, Netzmittel, Dispergierhilfen, Verlaufhilfsmittel, Entschäumer und Katalysatoren einzeln oder im Gemisch in den im Stand der Technik bekannten Mengen zugesetzt werden. Diese Substanzen können den Einzelkomponenten und/oder der Gesamtmischung zugesetzt werden.

Geeignete Füllstoffe sind beispielsweise Talkum, Glimmer, Kaolin, Kreide, Quarzmehl, Asbestmehl, Schiefermehl, Bariumsulfat, verschiedene Kieselsäuren, Silikate, Glasfasern, organische Fasern und dergleichen.

Die erfindungsgemäßen Überzugsmittel können neben Wasser die üblichen Lösemittel, beispielsweise aliphatische oder aromatische Kohlenwasserstoffe, ein-oder mehrwertige Alkohole, Ether, Ester, Glykolether sowie deren Ester, Ketone, wie z.B. Toluol, Butanol, Ethyl-oder Butylglykol sowie deren Acetate, Butyldiglykol, Ethylenglykoldimethylether, Diethylglykoldimethylether, Tetraethylenglykoldimethylether, Cyclohexanon, Methylethylketon, Aceton, Isophoron, N-Methylpyrrolidon oder N-Ethylpyrrolidon oder Mischungen davon enthalten. Bevorzugt sind jedoch Formulierungen, die lösemittelfrei sind oder allenfalls bis zu 5 Gew.-% in der Regel schwerflüchtiger Lösemittel enthalten.

Ein weiterer Gegenstand der vorliegenden Erfindung betrifft ein Verfahren zur Herstellung eines Füllers für die Automobilindustrie auf der Basis einer wäßrigen Polyurethandispersion mit einem Feststoffgehalt von 10 bis 50 %, einer Viskosität im Bereich von 10 bis 50 000 und vorzugsweise 10 bis 5 000 mPa.s, wie oben definiert. Entsprechend dem erfindungsgemäßen Verfahren setzt man Polyetherpolyole mit endständigen Hydroxylgruppen, die eine Funktionalität größer oder gleich 3 und ein Molekulargewicht im Bereich von 1 000 bis 20 000 und vorzugsweise im Bereich von 3 000 bis 12 000 aufweisen, zusammen mit einem gegebenenfalls alkoxylierten Polyol mit einem organischen Diisocyanat in einem solchen Molverhältnis um, daß ein Zwischenprodukt mit endständigen Isocyanatgruppen entsteht, das mit anionische Gruppen tragenden Dihydroxy-und/oder Diaminoverbindungen, die Carboxylat-, Sulfonat-und/oder Ammoniumgruppen tragen, zur Reaktion gebracht wird, das gegebenenfalls mit einem Diamin mit primären und/oder sekundären Ammoniumgruppen umgesetzt und in Wasser suspendiert wird.

Das Herstellungsverfahren besteht insbesondere darin, daß ein stöchiometrischer Überschuß eines Diisocyanats oder einer Mischung von Diisocyanaten mit den Polyetherpolyolen, den gegebenenfalls alkoxylierten oleochemischen Polyolen und den Dihydroxy-und/oder Diaminoverbindungen zu einem Zwischenprodukt mit endständigen Isocyanatgruppen umgesetzt wird.

Eine bevorzugte Ausführungsform des Verfahrens besteht darin, daß zunächst die Polyetherpolyole und die oleochemischen Polyole mit dem Diisocyanat zu einem Prepolymer mit endständigen Isocyanatgruppen umgesetzt werden und dann dieses Prepolymer mit den reaktionsfähigen Wasserstoffatomen der löslichkeitzvermittelnden Verbindung der Dihydroxy-und/oder Diaminoverbindungen reagiert, um löslichkeitsvermittelnde ionische Gruppen einzuführen. Die die Löslichkeit vermittelnde Dihydroxy-und/oder Diaminoverbindung kann in Form eines Salzes eingeführt werden und/oder in Form der Säure zugesetzt und im Verlauf oder nach der Urethanbildung neutralisiert werden.

Erfindungsgemäß werden die oben definierten wasserverdünnbaren Überzugsmittel vorzugsweise für die Herstellung eines Füllers in der Automobilindustrie verwendet.

Es zeigte sich, daß Polyurethandispersionen auch unter Verwendung der Polyetherpolyole und der oleochemischen Polyole ohne gleichzeitige Verwendung der Dihydroxy-und/oder Diaminoverbindungen nicht ausreichen, um die gewünschte Verbesserung zur Herstellung eines Füllers für die Automobilindustrie zu erzielen.

Insbesondere zeigte sich, daß die Funktionalität der Polyetherpolyole und deren Molekulargewicht essentiell für die Vorteile der vorliegenden Erfindung ist.

Beispiele

Bezeichnung der gepruüften Polyole:

Polyol 1 : trifunktionelles Polyetherpolyol der Struktur (I)
Polyol 2a: Rizinusöl
Polyol 2b: Ringöffnungsprodukt eines epoxidierten Sojaöls mit Methanol
Polyol 2c: Rizinusöl mit 6,1 PO
Polyol 2d: Rizinusöl mit 3 EO und 17 PO
Polyol 2e: Rinzinusöl mit 2 EO und 7 PO
Polyol 3 : Dimethylolpropionsäure

Geprüfte Isocyanate:

Isophorondiisocyanat Desmocap 11 (Bayer)

der Hersteller bezeichnet Desmocap 11 als verkapptes Isocyanat auf Basis eines verzweigten Polymers

Beispiele 1 bis 11

| | I | | II | |
|---|---|---|---|---|
| | GT | % | GT | % |
| Polyol IIa | 63,98 | 10,07 | 81,28 | 10,42 |
| Polyol I | 80,94 | 12,74 | 102,81 | 13,18 |
| Polyol IIb | - | - | - | - |
| Polyol III | 16,45 | 2,59 | 20,90 | 2,68 |
| N-Methylpyrrolidon | 18,04 | 2,84 | 22,93 | 2,94 |
| Isophorondiisocyanat | 100,00 | 15,74 | 100,00 | 12,82 |
| Desmocap 11 | - | - | - | - |
| N-Methylmorpholin | 13,28 | 2,09 | 16,85 | 2,16 |
| Triethylamin | - | - | - | - |
| Wasser | | 53,93 | | 55,80 |

| | III | | IV | |
|---|---|---|---|---|
| | GT | % | GT | % |
| Polyol IIa | 62,73 | 10,40 | 46,98 | 6,07 |
| Polyol I | 76,48 | 12,68 | 152,90 | 19,76 |
| Polyol IIb | - | - | - | - |
| Polyol III | 9,41 | 1,56 | 15,63 | 2,02 |
| N-Methylpyrrolidon | 18,03 | 2,99 | 18,03 | 2,33 |
| Isophorondiisocyanat | 100,00 | 16,58 | 100,00 | 12,92 |
| Desmocap 11 | - | - | - | - |
| N-Methylmorpholin | 7,6 | 1,26 | 12,62 | 1,63 |
| Triethylamin | - | - | - | - |
| Wasser | | 54,53 | | 55,27 |



BAD ORIGINAL

| | V | | VI | |
|---|---|---|---|---|
| | GT | % | GT | % |
| Polyol I | 80,96 | 13,35 | 80,96 | 13,35 |
| Polyol IIb | 45,06 | 7,43 | 45,06 | 7,43 |
| Polyol III | 16,43 | 2,71 | 16,43 | 2,71 |
| N-Methylpyrrolidon | 18,01 | 2,97 | 18,01 | 2,97 |
| Isophorondiisocyanat | 100,00 | 16,49 | 100,00 | 16,49 |
| Desmocap 11 | - | - | - | - |
| N-Methylmorpholin | 13,28 | 2,19 | - | - |
| Triethylamin | - | - | 13,28 | 2,19 |
| Wasser | | 54,86 | | 54,86 |

| | VII | | VIII | |
|---|---|---|---|---|
| | GT | % | GT | % |
| Polyol IIc | 62,69 | 9,89 | - | - |
| Polyol IIa | - | - | 31,40 | 3,37 |
| Polyol I | 80,88 | 12,76 | 229,30 | 24,60 |
| Polyol IIb | - | - | - | - |
| Polyol III | 16,45 | 2,60 | 19,85 | 2,13 |
| N-Methylpyrrolidon | 18,03 | 2,84 | 31,41 | 3,37 |
| Isophorondiisocyanat | 100,00 | 15,78 | 100,00 | 10,73 |
| Desmocap 11 | - | - | - | - |
| N-Methylmorpholin | 13,27 | 2,09 | 16,02 | 1,72 |
| Triethylamin | - | - | - | - |
| Wasser | | 54,04 | | 54,08 |



BAD ORIGINAL

| | IX | | X | |
|---|---|---|---|---|
| | GT | % | GT | % |
| Polyol I | 80,88 | 12,14 | 6,39 | 1,28 |
| Polyol IIb | 42,11 | 6,32 | 51,85 | 10,39 |
| Polyol III | 16,46 | 2,47 | 15,42 | 3,09 |
| N-Methylpyrrolidon | 18,05 | 2,71 | 22,41 | 4,49 |
| Isophorondiisocyanat | 100,00 | 15,01 | 100,00 | 20,04 |
| Desmocap 11 | 62,96 | 9,45 | 29,94 | 6,00 |
| N-Methylmorpholin | 13,26 | 1,99 | 12,43 | 2,49 |
| Triethylamin | - | - | - | - |
| Wasser | | 49,91 | | 52,22 |

| | XI | |
|---|---|---|
| | GT | % |
| Polyol IId | 90,98 | 13,12 |
| Polyol I | 80,86 | 11,66 |
| Polyol III | 16,43 | 2,37 |
| N-Methylpyrrolidon | 18,03 | 2,60 |
| Isophorondiisocyanat | 100,00 | 14,42 |
| N-Methylmorpholin | 13,25 | 1,91 |
| Triethylamin | - | - |
| Wasser | | 53,92 |

| | XII | |
|---|---|---|
| | GT | % |
| Polyol IIe | 79,26 | 12,23 |
| Polyol I | 80,56 | 12,43 |
| Polyol III | 16,40 | 2,53 |
| N-Methylpyrrol | 17,97 | 2,77 |
| Isophorondiisocyanat | 100,00 | 15,34 |
| N-Methylmorpholin | 13,22 | 2,04 |
| Wasser | - | 52,66 |



BAD ORIGINAL

Beispiel 13

Es wurde eine Rostschutz-Grundierung, bestehend aus

| | | |
|---|---|---|
| 142 | Gew.-Teilen | Alkydharzmikroemulsion (s. DE-PS 33 13 595), 85 %ig in Wasser |
| 119 | Gew.-Teilen | deionisiertem Wasser |
| 95 | Gew.-Teilen | Eisenoxidrot |
| 95 | Gew.-Teilen | Zinkphosphat |
| 72 | Gew.-Teilen | Talkum |
| 179 | Gew.-Teilen | Bariumsulfat |
| 32 | Gew.-Teilen | Dispergierhilfsmittel (Polyacrylatsalz) |

hergestellt und aufgelackt mit folgenden Substanzen:

| | | |
|---|---|---|
| 43 | Gew.-Teile | Melaminharz |
| 161 | Gew.-Teile | erfindungsgemäße Polyurethan-Dispersion entsprechend Beispiel IX |
| 63 | Gew.-Teile | deionisiertes Wasser |
| 1 000 | Gew.- Teile | |

Nach dem Einstellen mit deionisiertem Wasser auf eine Viskosität von ca. 50 sec (DIN 53 211) wurde der Lack auf entfettetes Karrosserieblech mit einer Druckluftspritzpistole appliziert und nach einer Ablüftzeit von 10 min bei 160 °C 15 min lang eingebrannt.

| | Lackmuster ohne PU- Dispersion | Lackmuster mit PU-Dispersion |
|---|---|---|
| Schichtdicke | ca. 35 µm | ca. 35 µm |
| Impacttest | ca. 30 inch-pounds | ca. 70 inch-pounds |
| Haftung (DIN 53 151) | GT 2 | GT 0 |



BAD ORIGINAL

Beispiel 14

Mit Hilfe eines Labordissolvers wurde nachfolgender Einschicht-Decklack, weiß, hergestellt:

42 Gew.-Teile Alkydharzmikroemulsion, 85 %ig in Wasser entsprechend Beispiel 13
42 Gew.-Teile deionisiertes Wasser
25 Gew.-Teile Dispergierhilfsmittel (Polyacrylatsalz)
180 Gew.-Teile Titandioxid

aufgelackt wurde mit folgenden Substanzen:

261 Gew.-Teile Alkydharzmikroemulsion, 85 %ig in Wasser, entsprechend Beispiel 13
111 Gew.-Teile Melaminharz
169 Gew.-Teile erfindungsgemäße Polyurethan-Dispersion entsprechend Beispiel II
170 Gew.-Teile deionisiertes Wasser

1 000 Gew.-Teile

Applikationsbedingungen s. Beispiel 13.

| | Lackmuster ohne PU-Dispersion | Lackmuster mit PU-Dispersion |
|---|---|---|
| Schichtdicke | ca. 35 µm | ca. 35 µm |
| Impacttest | 30 inch-pounds | 70 inch-pounds |
| Haftung (DIN 53 151) | GT 1-2 | GT 0 |
| Glanz (60° ∢) | ca. 78 % | ca. 83 % |

Beispiel 15



BAD ORIGINAL

Automobil-Füller

Mit Hilfe eines Labordissolvers wurde nachfolgender Automobil-Füller hergestellt:

| | | |
|---|---|---|
| 53 | Gew.-Teile | Alkydharzmikroemulsion, 85 %ig in Wasser entsprechend Beispiel 13 |
| 53 | Gew.-Teile | deionisiertes Wasser |
| 91 | Gew.-Teile | Titandioxid |
| 0,3 | Gew.-Teile | Ruß |
| 92 | Gew.-Teile | Bariumsulfat |
| 23 | Gew.-Teile | Dispergierhilfsmittel |

aufgelackt wurde mit folgenden Substanzen:

| | | |
|---|---|---|
| 204 | Gew.-Teile | Alkydharzmikroemulsion, 85 %ig in Wasser, entsprechend Beispiel 13 |
| 34 | Gew.-Teile | Melaminharz |
| 179 | Gew.-Teile | erfindungsgemäße Polyurethan-Dispersion entsprechend Beispiel I |
| 270,7 | Gew.-Teile | deionisiertes Wasser |
| 1 000 | Gew.-Teile | |

Applikationsbedingungen s. Beispiel 13.

Gegenüber einer Blindprobe wird die Haftung auf einem z.B. kataphoretisch lackierten Untergrund von Gitterschnittkennwert GT 2 (DIN 53 151) auf Kennwert GT 0 gesteigert. Die Haftung einer nachfolgenden Lackierung, insbesondere von Lacken auf Basis von wasserverdünnbaren Alkydharzen, wie z.B. dem weißen Decklack, Beispiel 14, wird nach der Prüfnorm DIN 53 151 von Gitterschnittkennwert GT 2 nach Gitterschnittkennwert GT 0 verbessert.

Die Elastizität, geprüft mit dem Kugelschlag-Prüfgerät, Typ 304 (Fa. Erichsen), wird von ca. 30 inch-pounds auf 70 inch-pounds gesteigert. Die Steinschlagfestigkeit eines 2-Schichtaufbaus, bestehend aus Füller und einem lösemittelhaltigen Decklack, wird, geprüft mit dem Steinschlag-Prüfgerät, Typ 508 (Fa. Erichsen), von Kennwert 3 bis 4 auf Kennwert 1 bis 2 verbessert. Der Glanzgrad der Überzüge, gemessen unter einem Winkel von 60 ° wird von ca. 45 bis 50 % auf ca. 60 bis 65 % erhöht.

Vergleichsbeispiele:

Es wurden Polyurethan-Dispersionen nach dem in der vorliegenden erfindung beschriebenen Verfahren sowie nach verschiedenen anderen Verfahren des Standes der Technik hergestellt, wobei als Polyol ein PPG 1025 statt der erfindungsgemäßen Polyolkombinationen verwendet wurde. Alle diese Dispersionen führten in den anwendungstechnischen Prüfungen zu erheblich schlechteren Filmeigenschaften, wie z.B. Glanzgradabfall, Filmstörungen und klebrigen Oberflächen.

**Ansprüche**

1. Wasserverdünnbare Überzugsmittel zur Herstellung eines Füllers für die Automobilindustrie auf der Basis einer wäßrigen Polyurethandispersion mit einem Feststoffgehalt von 10 bis 50 % und einer Viskosität im Bereich von 10 bis 50 000 mPa.s, dadurch gekennzeichnet, daß die Polyurethandispersion besteht aus



BAD ORIGINAL

(a) Polyetherpolyolen mit endständigen Hydroxylgruppen, einer Funktionalität größer oder gleich 3 und einem Molekulargewicht im Bereich von 1 000 bis 20 000,

(b) gegebenenfalls alkoxylierten oleochemischen Polyolen,

(c) anionische Gruppen tragenden Dihydroxy-und/oder Diaminoverbindungen und

(d) organischen Diisocyanaten.

2. Wasserverdünnbare Überzugsmittel nach Anspruch 1, dadurch gekennzeichnet, daß die Viskosität der Dispersion im Bereich von 10 bis 5 000 mPa.s liegt.

3. Wasserverdünnbare Überzugsmittel nach Ansprüchen 1 und 2, dadurch gekennzeichnet, daß das Polyetherpolyol mit endständigen Hydroxylgruppen und einer Funktionalität größer oder gleich 3 vorzugsweise ein Molekulargewicht im Bereich von 3 000 bis 12 000 aufweist.

4. Wasserverdünnbare Überzugsmittel nach Ansprüchen 1 bis 3, dadurch gekennzeichnet, daß das Polyetherpolyol der allgemeinen Formel (I)

$$[R]_x \begin{array}{l} \left[(CH_2-CH_2-O)_a - (CH_2-\underset{CH_3}{\underset{|}{CH}}-O)_b - (CH_2-CH_2O)_c\right]_y - H \\ \left[(CH_2-\underset{CH_3}{\underset{|}{CH}}-O)_d - (CH_2-CH_2-O)_e\right]_z - H \end{array} \qquad (I)$$

in der

R für einen Glycerin-, Trimethylolpropan-, Trimethylolethan-, oder Polyglycerinrest mit dem Polymerisationsgrad x = 1 bis 6 steht und die Indices y = (x - z + 2), z = 0 bis 4, a = 1 bis 15, b = 20 bis 100, c = 1 bis 15, d = 20 bis 150 und e = 1 bis 15 bedeuten mit der Maßgabe, daß die Summen (a + c + e) = 3 bis 40, (b + d) = 40 bis 300 und (c + e) = 1 bis 15 bedeuten und y mindestens den Wert 1 besitzt.

5. Wasserverdünnbare Überzugsmittel nach den Ansprüchen 1 bis 4, dadurch gekennzeichnet, daß die oleochemischen Polyole bestehen aus Triolen und Polyolen mit wenigstens 10 C-Atomen, hergestellt durch Addition einwertiger Alkohole mit 1 bis 8-C-Atomen an epoxidierte Trigylceridöle, wobei die gegebenenfalls gereinigten Addtionsprodukte mit Alkylenoxiden mit 2 bis 4 C-Atomen zur Reaktion gebracht werden, Rizinusölalkoxylaten mit 0 bis 50 Ethylenoxid-und/ oder 0 bis 100 Propylenoxidgruppen, Ringöffnungsprodukten von Soja-und/oder Leinölepoxiden mit Methanol und Rizinusöl mit 0 bis 10 Ethylenoxid-und/oder 0 bis 40 Propylenoxidgruppen.

6. Wasserverdünnbare Überzugsmittel nach Ansprüchen 1 bis 5, dadurch gekennzeichnet, daß die anionische Gruppen tragenden Dihydroxy-und/oder Diaminoverbindungen Carboxylat-, Sulfonat-und/oder Ammoniumgruppen enthalten, wobei die bevorzugte Dihydroxyverbindung Dimethylolpropionsäure ist.

7. Wasserverdünnbare Überzugsmittel nach Ansprüchen 1 bis 6, dadurch gekennzeichnet, daß die organischen Diisocyanate aliphatisch sind und vorzugsweise aus Isophorondiisocyanat, 4.4-Methylen-bis-(cyclohexylisocyanat), Hexamethylen-1.6-diisocyanat und Dimerfettsäurediisocyanat bestehen.

8. Wasserverdünnbare Überzugsmittel nach Ansprüchen 1 bis 7, dadurch gekennzeichnet, daß sie als zusätzliche Bindemittelkomponente ein blockiertes Polyisocyanat mit einem Anteil von 0 bis 60 Gew.-% und vorzugsweise von 1 bis 10 Gew.%, bezogen auf den Festkörpergehalt der Polyurethandispersion, enthalten.

9. Wasserverdünnbare Überzugsmittel nach Ansprüchen 1 bis 8, dadurch gekennzeichnet, daß sie zusätzlich ein Diamin mit primären und/oder sekundären Aminogruppen enthalten.

10. Wasserverdünnbare Überzugsmittel nach den Ansprüchen 1 bis 9, dadurch gekennzeichnet, daß sie als weitere Bindemittelkomponente ein Melaminharz und/oder ein wasserverdünnbares Polyesterharz und/oder ein wasserverdünnbares Polyacrylatharz enthalten, wobei das Gewichtsverhältnis Melaminharz : Polyesterharz und/oder Polycrylatharz 1 : 1 bis 1 : 9 beträgt und der Gesamtanteil an Melaminharz, Polyester-und Polyacrylatharz, bezogen auf den Festkörpergehalt der Polyurethandispersion, 1 : 0,1 bis 1 : 100, vorzugweise 1 : 0,1 bis 1 : 0,9, beträgt.

11. Verfahren zur Herstellung eines Füllers für die Automobilindustrie auf die Basis einer wäßrigen Polyurethandispersion mit einem Feststoffgehalt von 10 bis 50 %, einer Viskosität im Bereich von 10 bis 50 000 mPa.s und vorzugsweise im Bereich von 10 bis 5 000m Pas nach den Ansprüchen 1 bis 10, dadurch gekennzeichnet, daß man Polyetherpolyole mit endständigen Hydroxylgruppen, einer Funktionalität größer oder gleich 3 und einem Molekulargewicht im Bereich von 1 000 bis 20 000 und vorzugsweise im Bereich von 3 000 bis 12 000 zusammen mit gegebenenfalls alkoxylierten Polyolen mit organischen Diisocyanaten

in einem solchen Molverhältnis umsetzt, daß ein Zwischenprodukt mit endständigen Isocyanatgruppen entsteht, das mit anionische Gruppen tragenden Dihydroxy-und/oder Diaminoverbindungen, die Carboxylat-, Sulfonat-und/oder Ammoniumgruppen tragen, zur Reaktion gebracht wird, das gegebenenfalls mit einem Diamin mit primären und/oder sekundären Aminogruppen umsetzt und das erhaltene Polyurethan anschließend in Wasser suspendiert.

12. Verwendung der wasserverdünnbaren Überzugsmittel nach Ansprüchen 1 bis 11 für die Herstellung eines Füllers in der Automobilindustrie.